(19) Europäisches Patentamt
European Patent Office
Office européen des brevets

(11) EP 2 712 507 B1

(12) **EUROPEAN PATENT SPECIFICATION**

(45) Date of publication and mention
of the grant of the patent:
**15.07.2015 Bulletin 2015/29**

(51) Int Cl.:
*A23K 1/02* (2006.01)          *A23K 1/00* (2006.01)
*A23N 17/00* (2006.01)          *B01F 13/00* (2006.01)
*B01F 3/14* (2006.01)

(21) Application number: **13182053.2**

(22) Date of filing: **28.08.2013**

(54) **Process for the manufacture of an animal feed block**

Verfahren zur Herstellung eines Futtermittelblocks

Procédé pour la fabrication d'un bloc d'alimentation animale

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2012 DE 102012018991**
**01.10.2012 US 201213632975**

(43) Date of publication of application:
**02.04.2014 Bulletin 2014/14**

(73) Proprietor: **Carrs Agriculture Limited**
**Old Croft Stanwix**
**Carlisle, Cumbria CA3 9BA (GB)**

(72) Inventors:
• **HILLYER, Nigel John**
**Leighton, Crewe, Cheshire CW1 3QQ (GB)**
• **ATHERTON, Edward**
**Carlisle, Cumbria CA7 8LZ (GB)**

(74) Representative: **Stuttard, Garry Philip**
**Urquhart-Dykes & Lord LLP**
**Tower North Central**
**Merrion Way**
**Leeds LS2 8PA (GB)**

(56) References cited:
**CA-A1- 2 486 238      GB-A- 2 434 732
US-A- 3 961 081      US-A- 4 631 192
US-A- 4 846 053      US-A1- 2004 018 288**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for the manufacture of an animal feed block according to a target constituent formulation.

Solid animal feed blocks are becoming increasingly popular in the farming community. Feed blocks provide a combination of wet and dry feed grade raw materials formulated to provide nutritional value to ruminant animals and are a convenient way to administer regulated quantities of nutraceuticals, vitamins, minerals or proteins over a period of time.

Production methods for feed blocks involve chemical reactions and may require varying degrees of heat and a catalyst such as calcium oxide (CaO) or magnesium oxide (MgO). The oxides hydrate when they come into contact with moisture contained in the wet materials. Many chemical reactions which occur during production of a feed block are not fully understood and bear a resemblance to cement chemistry. Control of these reactions is difficult and significant waste material is a feature of the industry. Inconsistent product quality can occur with only minor adjustments in quantity, weight or particle size of the ingredients being used. These adjustments have a direct impact upon the severity of the reaction during formulation. US-A-2004/0018288 discloses a continuous process for the production of animal feed supplements in which amounts of dry ingredients are mixed into a dry pre-mix. Mixing of the dry pre-mix with a wet pre-mix is regulated by adjusting their speed of flow. US-A-4631192 discloses a continuous flow process for making a hardened animal feed composition.

The present invention seeks to provide a continuous process for the manufacture of a precisely nutritionally formulated animal feed block which ensures that accurate quantities of pre-blended dry ingredients and pre-blended wet ingredients are mixed with an accurate relative amount of an active ingredient to a predetermined consistency.

According to a first aspect of the invention, there is provided a process for manufacturing an animal feed block according to a target constituent formulation in an apparatus which comprises

(A) in a dry feeding zone, a first dry feeder which includes a first dry hopper charged with a dry pre-mix and a first material handling conveyor and a second dry feeder which includes a second dry hopper charged with an active ingredient and a second material handling conveyor,

(B) in a dry mixing zone downstream from the dry feeding zone, a dry mixer and an under hopper downstream from the dry mixer,

(C) in a liquid feeding zone, a first liquid feeder which includes a first liquid feeding device and a first liquid tank charged with a wet pre-mix which includes a liquid by-product and a liquid additive,

(D) a slurry mixer downstream from the dry mixing zone and the liquid feeding zone and

(E) a dispensing assembly downstream from the slurry mixer, the process comprising:

(A1) discharging and conveying the dry pre-mix from the first dry hopper to the dry mixer by the first material handling conveyor;

(A2) measuring the cumulative weight of the dry pre-mix in the dry mixer;

(A3) calculating a target weight of active ingredient to be conveyed to the dry mixer, wherein the target weight of the active ingredient and the cumulative weight of the dry pre-mix are constituently proportionate to the target constituent formulation;

(A4) discharging and conveying the active ingredient from the second dry hopper to the dry mixer by the second material handling conveyor;

(A5) during step (A4) *either* measuring the loss in weight of the active ingredient in the second dry hopper and causing step (A4) to cease when the loss in weight of the active ingredient equates to the target weight of the active ingredient calculated in step (A3) *or*

measuring the weight of dry material in the dry mixer and causing step (A4) to cease when the weight of dry material in the dry mixer equates to the sum of the target weight of the active ingredient calculated in step (A3) and the cumulative weight of the dry pre-mix measured in step (A2);

(B1) mixing the active ingredient and the dry pre-mix in the dry mixer into a substantially homogeneous dry mix;

(B2) discharging the substantially homogeneous dry mix into the under hopper;

(B3) measuring the weight of the substantially homogeneous dry mix in the under hopper;

(B4) discharging and conveying the substantially homogeneous dry mix from the under hopper to the slurry mixer;

(B5) measuring the rate of the loss in weight of the substantially homogeneous dry mix in the under hopper during step (B4);

(C1) calculating a target flow rate of the wet pre-mix to be conveyed to the slurry mixer,

wherein the target flow rate of the wet pre-mix and the rate of the loss in weight of the substantially homogeneous dry mix measured in step (B5) are constituently proportionate to the target constituent formulation;

(C2) discharging and conveying the wet pre-mix from the first liquid tank to the slurry mixer at an actual flow rate;

(C3) measuring the actual flow rate of the wet pre-mix;

(C4) adjusting continuously the actual flow rate to achieve the target flow rate;

(D1) mixing the substantially homogeneous dry mix and the wet pre-mix in the slurry mixer into a substantially homogeneous slurry;

(E1) discharging the substantially homogeneous slurry into the dispensing assembly;

(E2) dispensing the substantially homogeneous slurry portionwise from the dispensing assembly into receptacles; and

(E3) allowing the substantially homogeneous slurry in each receptacle to cool to form an animal feed block, wherein the process further comprises:

(A6) calculating a target weight of wet pre-mix to be conveyed to the slurry mixer, wherein the target weight of the wet pre-mix and the cumulative weight of the dry pre-mix are constituently proportionate to the target constituent formulation.

The process of the invention advantageously eliminates the spoiling of formulation by inconsistent and fluctuating levels of active ingredient and wet ingredients so as to ensure repeatability from one batch to another.

In a preferred embodiment, step (A5) is carried out during step (A4) by measuring the weight of dry material in the dry mixer and causing step (A4) to cease when the weight of dry material in the dry mixer equates to the sum of the target weight of the active ingredient calculated in step (A3) and the cumulative weight of the dry pre-mix measured in step (A2). Typically the process is carried out without heating. For example, the animal feed block is a chemical feed block which is formed exothermically during steps (C), (D) and (E).

The process may further comprise: heating the wet pre-mix to a temperature between ambient and 40C. The heating step may serve to improve and maintain a constant viscosity and ensure consistent reaction during step (D1).

The amount of wet pre-mix in the target constituent formulation may be in the range 30 to 40wt%.

The amount of dry pre-mix in the target constituent formulation may be in the range 55 to 65wt%.

The ratio of the weight of wet pre-mix to dry pre-mix in the target constituent formulation may be in the range 0.50:1 to 0.60:1.

The liquid by-product is typically a liquid by-product of feed value to ruminating animals. The liquid by-product may be an agricultural liquid by-product (ie the liquid by-product of the refinement of an agricultural raw material).

The amount of liquid by-product in the target constituent formulation may be in the range 25 to 40wt%, preferably 30 to 35wt%.

The liquid by-product may be selected from the group consisting of sugar cane molasses, sugar beet molasses, starch molasses, citrus (eg apple) molasses, pot ale syrup, whey, corn steep liquor, stillage and a mixture thereof.

Preferably the liquid by-product is a liquid carbohydrate-containing by-product. The liquid carbohydrate-containing by-product may be a sugar or a syrup.

A preferred liquid by-product is (or includes) molasses. The amount of molasses in the target constituent formulation may be up to 40wt%. The amount of molasses in the target constituent formulation may be in the range 5 to 15wt%, preferably 9 to 11 wt%.

A preferred liquid by-product is (or includes) corn steep liquor.

A preferred liquid by-product is (or includes) molasses and corn steep liquor.

The liquid additive may be a source of carbohydrate, a source of nitrogen, a source of protein, a source of fat, an acid (eg sulphuric acid) or a base.

A preferred liquid additive is vegetable oil. The amount of vegetable oil in the target constituent formulation may be in the range 2.0 to 3.0wt%.

The vegetable oil may be corn oil, soy oil, palm oil or maize oil.

The active ingredient is typically an alkaline earth metal oxide. The alkaline earth metal oxide is preferably calcium oxide (eg quick lime) and/or magnesium oxide. Calcium oxide (eg quicklime) is particularly preferred.

The amount of active ingredient in the target constituent formulation may be in the range 3.0 to 7.0wt%.

Typically the dry pre-mix comprises a dry protein and a dry mineral.

The dry pre-mix may further comprise a source of carbohydrate, a source of nitrogen (eg urea), a source of protein or a source of fat. The dry pre-mix may further comprise a mineral.

The dry pre-mix may further comprise a dry ingredient selected from the group consisting of a vitamin, a mineral (eg limestone), a protein, a flavouring, a colourant, a preservative, a pharmaceutical, a stabiliser, a fat, a nutritional supplement, a dietary supplement (eg sodium chloride), a carbohydrate, soapstock, urea, lignin sulphonate, lecithin and fibres.

The process may further comprise:

(A7) adding one or more dry additives to the dry mixer.

Step (A7) may be carried out by hand (eg using a hand additives facility).

The (or each) dry additive may be a source of carbohydrate, a source of nitrogen (*eg* urea), a source of protein or a source of fat. Each of the one or more dry additives may be a mineral. The dry additive may enhance the physical properties (*eg* durability or anti-caking) of the feed block.

The (or each) dry additive may be selected from the group consisting of a vitamin, a mineral (*eg* limestone), a protein, a flavouring, a colourant, a preservative, a pharmaceutical, a stabiliser, a fat, a nutritional supplement, a dietary supplement (*eg* sodium chloride), a carbohydrate, soapstock, urea, lignin sulphonate, lecithin and fibres.

Step (B2) may be carried out gravitationally.

Measuring steps (A2), (B3) and (B5) may be carried out by a load cell.

The receptacles may be mounted on a receptacle conveyor.

The process may further comprise:

(E2a) advancing the receptacles consecutively on a receptacle conveyor to beneath a mechanical leveller;

(E2b) mechanically levelling the homogeneous slurry in each receptacle using the mechanical leveller.

The mechanical leveller may include a rotary knife positionable at or near to the rim of the receptacle to spread the homogeneous slurry evenly across the receptacle.

The process may further comprise:

(E2c) moving the receptacles onto a labelling conveyor for consecutive labelling.

In step (E1), the substantially homogeneous slurry may be poured, pumped, extruded or conveyed from the dispensing assembly into the receptacles.

The actual flow rate of the wet pre-mix measured in step (C3) may be a volume flow rate or a mass flow rate.

The wet pre-mix in the first liquid tank may be agitated.

The process may further comprise:

(A8) adding one or more additional liquid additives to the first liquid tank.

Step (A8) may be carried out by hand (*eg* using a hand additives facility).

The one or more additional liquid additives may contribute to achieving the target constituent formulation or ensure full homogenisation in step (D1).

The apparatus may further comprise in the liquid feeding zone one or more additional liquid feeders, wherein each additional liquid feeder includes an additional liquid feeding device and an additional liquid tank. The (or each) additional liquid tank may be charged with the wet pre-mix.

Typically the (or each) liquid feeding device includes a liquid pump and a flow meter. The flow meter may be a volume or mass flow meter. Preferred is a mass flow meter.

The (or each) liquid feeding device may include a discharge valve downstream from the liquid tank.

The apparatus may further comprise in the dry feeding zone one or more additional dry feeders, wherein each additional dry feeder includes an additional dry hopper and an additional material handling conveyor. In the process of the invention, the (or each) additional dry hopper may be charged with the dry pre-mix. An additional dry hopper may be charged with a dry additive.

The (or each) dry feeder may comprise a downstream valve.

Each material handling conveyor may be a screw feeding device equipped with single feed or twin feed screws. The screw feeding device may be equipped with twin concave-profile screws, twin auger screws, single spiral screws, double spiral screws, twin spiral screws or single auger screws. The screw feeding device may be variable speed.

The dry mixer may be a paddle-type mixer (*eg* a Forberg paddle-type mixer).

Typically the speed of the slurry mixer in step (D1) is in the range 300 to 800rpm. The slurry mixer may be a Scott slurry mixer.

Step (B4) is preferably carried out by a variable speed material handling conveyor. For example, the homogeneous dry mix may be conveyed to the slurry mixer by the variable speed material handling conveyor at a speed in the range 10 to 20 tons per hour (*eg* about 15 tons per hour).

Preferably when the actual flow rate approximates consistently to the target flow rate, the process further comprises:

(D2) locking the speed of the slurry mixer;
(D3) locking the speed of the variable speed material handling conveyor.

Preferably the process further comprises:

(D4) causing step (C2) to cease when the rate of the loss in weight measured in step (B5) is zero.

The process may be partly or fully computer-controlled. A computer may control one or more of the steps of the process. Sensors may also be provided for monitoring each step of the process and the apparatus. The sensors may include temperature sensors, weight sensors, strain gauges, pressure sensors or vacuum sensors. Each of the steps may be controlled by a programmable logic controller.

The present invention will now be described in a non-limitative sense with reference to the accompanying Figures in which:

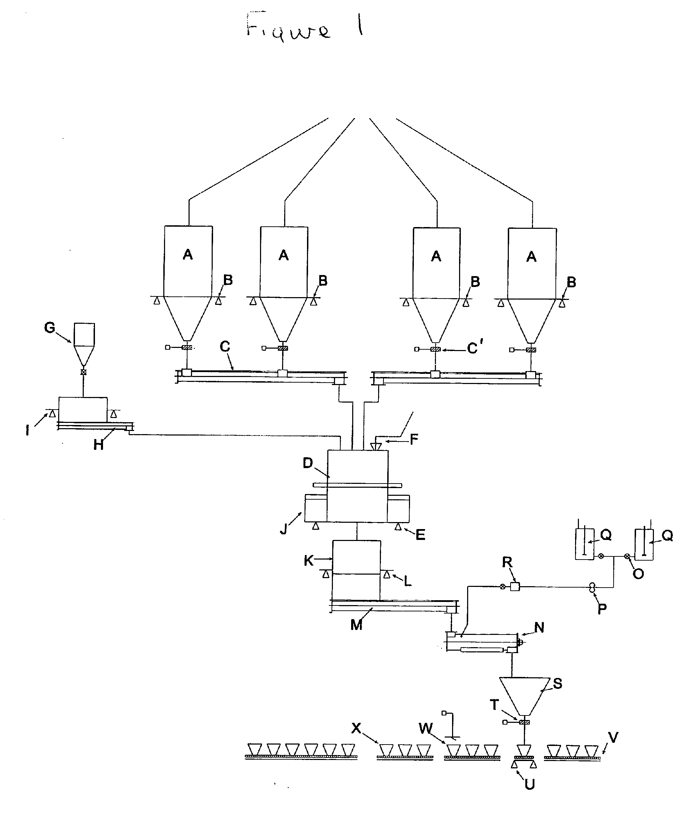

Figure 1 illustrates an apparatus for carrying out an embodiment of the process of the invention.

The apparatus illustrated in Figure 1 primarily comprises a dry feeding zone, a dry mixing zone downstream from the dry feeding zone, a liquid feeding zone, a slurry mixer downstream from the dry mixing zone and the liquid feeding zone and a dispensing assembly downstream from the slurry mixer.

Described below is an embodiment of a process for the manufacture of a single batch of animal feed blocks according to a target constituent formulation carried out in the apparatus illustrated in Figure 1. The process may be applied equally to continuous batch production and ensures consistency of the formulation from one batch to the next.

Step (1)

Dry ingredients are supplied in a dry pre-mix which is conveyed by either a pneumatic or material handling means (not shown) to batch hoppers (A) in the dry feeding zone. A load cell (B) fitted to each batch hopper (A) measures the actual weight of the dry pre-mix in the batch hopper (A).

Step (2)

In the dry mixing zone, a high speed mixer (D) is equipped downstream with an under hopper (K). The dry pre-mix is discharged from the batch hoppers (A) via a pneumatic gate valve (C') and conveyed into the high speed mixer (D) by a material handling conveyor (C). Load cells (E) fitted to the high speed mixer (D) measure the precise cumulative weight of the dry pre-mix in the high speed mixer (D).

Step (3)

A process control system records the cumulative weight of the dry pre-mix in the high speed mixer (D) and calculates a target weight of an active ingredient. The target weight of the active ingredient and the cumulative weight of the dry pre-mix are constituently proportionate to the target constituent formulation.

Step (3) effectively compensates for any loss of dry pre-mix that may have occurred in the material handling conveyor (C) and pneumatic gate valve (C').

Step (4)

The process control system prompts the operator by alarm to make any requisite micro-addition of dry additives by hand to the high speed mixer (D) using a hand additives facility (F). The operator then confirms to the process control system by means of an individual pin number that any requisite micro-additions are complete.

Step (5)

The active ingredient contained within an active ingredient hopper (G) is discharged and conveyed into the high speed mixer (D) by a material handling conveyor (H). Load cells (I) located on the base of the active ingredient hopper (G) accurately measure the loss in weight of the active ingredient from the active ingredient hopper (G). The process control system monitors this loss in weight and when it equates to the target weight of the active ingredient calculated in step (3), the material handling conveyor (H) is shut off.

The effect of step (5) is to constituently proportionate the weight of active ingredient conveyed to the high speed mixer (D) and the cumulative weight of the dry ingredients recorded in step (3) (and any requisite micro-additions in step (4)) to the target constituent formulation.

Step (6)

The process control system then activates the mixer cycle (time) according to the desired consistency of the target constituent formulation to ensure that a fully homogeneous dry mix of the dry pre-mix, any requisite micro-additions and active ingredient is achieved within the high speed mixer (D).
Following completion of the mixer cycle (time) the process control system releases the homogeneous dry mix from the high speed mixer (D) into the under hopper (K) by opening the bomb doors (J). When the load cells (E) measure zero, the process control system closes the bomb doors (J).

Step (7)

Load cells (L) mounted on the under hopper (K) measure the actual weight of homogeneous dry mix in the under hopper (K) prior to the inclusion of the wet ingredients.
In the liquid feeding zone, the wet ingredients are supplied in a wet pre-mix which is housed in liquid storage tanks (Q). A discharge valve (O) and liquid pump (P) serve to discharge and convey the wet pre-mix through a pipe to a slurry mixer (N).

Step (8)

The process control system starts the discharge of homogeneous dry mix which is conveyed by a material handling conveyor (M) from the under hopper (K) into the slurry mixer (N). The process control system opens the discharge valve (O) and starts the liquid pump (P) to convey the wet pre-mix from the liquid storage tanks (Q) to the slurry mixer (N).
The process control system monitors the rate of the loss in weight of the homogeneous dry mix from the under hopper (K) measured by the load cells (L). The rate of the loss in weight is used by the process control system to calculate a target mass flow rate of wet pre-mix to be combined with the homogeneous dry mix at the inlet to the slurry mixer (N). The target mass flow rate of wet pre-mix and the rate of the loss in weight of the substantially homogeneous dry mix are constituently proportionate to the target constituent formulation.
A flow meter (R) measures continuously the actual mass flow rate of wet pre-mix. The process control system monitors the actual mass flow rate. By varying the speed of the liquid pump (P) to adjust the actual mass flow rate towards the target mass flow rate, the process control system constituently proportionate the rate of the loss in weight of the homogeneous dry mix and the actual mass flow rate of wet pre-mix to the target constituent formulation.
The process control system controls the speed of the slurry mixer (N) according to the desired consistency of the target constituent formulation.

Step (9)

The homogeneous dry mix and wet pre-mix are homogenised within the slurry mixer (N) on a continuous first in first out basis and the homogeneous slurry is discharged directly into a mechanical tub filler (S). The mechanical tub filler (S) ensures accurate and consistent flow of the homogeneous slurry into a tub at a filling and weighing station (U).
A filling control gate (T) is controlled by the process control system and opens in response to a signal from the filling and weighing station (U) that an empty tub is in place under the mechanical tub filler (S). The process control system monitors the weight of homogeneous slurry being discharged into the tub at the filling and weighing station (U) and closes the filling control gate (T) at the target weight.
The process control system records the final weight in the tub and starts the tub conveying line (V). The tub is moved forward from the filling and weighing station (U) to beneath a tub levelling conveyor (W). At the same time the next tub moves into position at the filling and weighing station (U) and the filling steps are repeated.
The tub levelling conveyor (W) includes a rotary knife positioned at the rim of the full tub to spread the homogeneous slurry evenly across the top of the full tub before the process control system move the full tub onto a labelling conveyor (X). The homogeneous slurry then solidifies to produce a glassy feed block upon cooling to ambient temperature.
The tub is then hand stacked onto pallets and placed into storage ready for dispatch.

**Example**

The following is an Example of a process for the manufacture of a batch of formulation having a target weight of 2000lbs carried out in the apparatus illustrated in Figure 1. The target constituent formulation of weight 2000lbs is made up of the following ingredients:

| Ingredient | Percentage | Weight (lbs) |
|---|---|---|
| **Wet Ingredients** | | |
| 1364 Corn Steep Liquor | 22.20 | 444.00 |
| 1369 Sulphuric Acid | 1.50 | 30.00 |
| 1373 Cane Molasses, 79.5 Brix | 10.00 | 200.00 |
| 1374 Vegetable oil | 2.45 | 49.00 |
| **Total Wet Ingredients** | **36.15** | **723.00** |
| **Dry Ingredients** | | |
| 1378 Am. Lignin Sulfonate | 8.60 | 172.00 |
| 1380 Urea 55% | 8.75 | 175.00 |
| TASCO Tasco | 2.00 | 40.00 |
| 0005 Rice Mill Feed | 15.00 | 300.00 |
| 1069 Distiller's Grains | 8.20 | 163.97 |
| 1812 Limestone | 6.95 | 139.00 |
| 1379 Salt (Sodium Chloride) | 6.90 | 138.00 |
| 1419 Calcium Oxide | 3.50 | 70.00 |
| 1770 Selenium 1% | 0.03 | 0.63 |
| 1901 SL Trace Mineral | 0.37 | 7.40 |
| 2011 Vit ADE Block Premix | 0.05 | 1.0 |
| **Total Dry Ingredients** | **60.35** | **1207** |
| **Active Ingredient** | | |
| MAGOX-56% HR | 3.50 | 70.00 |
| **Total Active Ingredient** | **3.50** | **70.00** |

***Process Parameters***

| | |
|---|---|
| *Forber Mix Time* | *60 seconds* |
| *Batch Process Time* | *12 minutes / 20 ton per hour* |
| *Scott Mixer Speed* | *365 rpm* |
| *Target Wet to Dry Ratio* | *0.56lb/1lb* |
| *Target Dry to Wet* | *1lb /0.5lbs* |
| *Tub Capacity* | *50lbs* |
| *Tub Filling Gate Shut Off* | *45lbs* |
| *In Flight Value* | *5lbs* |
| *Hand Additives Required* | *No* |

The dry ingredients specified above are supplied in a dry pre-mix which is purchased from a third party supplier or are blended by a third party blending system. A target weight of the dry pre-mix of 1207lbs according to the target constituent formulation is conveyed by either a pneumatic or material handling means (not shown in Figure 1) to batch hoppers (A) in the dry feeding zone.

A load cell (B) fitted to each batch hopper (A) measures the actual weight of the dry pre-mix (1150lbs) in the batch hoppers (A). The process control system records the actual weight of the dry pre-mix in the batch hoppers (A). By means of mathematical calculation, the target weight of dry pre-mix to be conveyed to a high speed Forberg paddle-type mixer (D) is adjusted by the process control system to the actual weight of the dry pre-mix:

$$\textit{target dry pre-mix = 1207lbs / actual dry pre-mix = 1150lbs}$$

The dry pre-mix (1150lbs) is discharged from the batch hoppers (A) via a pneumatic gate valve (C') and conveyed into the high speed Forberg paddle-type mixer (D) by a material handling conveyor (C).

Load cells (E) fitted to the high speed Forberg paddle-type mixer (D) measure the actual cumulative weight of the dry pre-mix (1100lbs) in the high speed Forberg paddle-type mixer (D).

*Revised target dry pre-mix = 1150lbs / actual cumulative dry pre-mix = 1100lbs (dry batch size reduced by 9%)*

The process control system records the actual cumulative weight of dry pre-mix (1100lbs). By means of mathematical calculation, the target weights of active ingredient and wet premix are adjusted proportional to the reduction in weight of dry pre-mix:

*target dry pre-mix 1207lbs (60.35 %)     revised target cumulative dry pre-mix 1100lbs (-9%)*
*target active ingredient 70lbs (3.5%)     revised target active ingredient 63lbs (-9%)*
*target wet pre-mix 723 lbs (36.15%)     revised target wet pre-mix 658lbs (-9%)*

The revised total target weight of dry material is 1163lbs (1100 + 63). The load cells (E) fitted to the high speed Forberg paddle-type mixer (D) measure the total weight of dry material in the high speed Forberg paddle-type mixer (D). The process control system records the total weight of dry material in the high speed Forberg paddle-type mixer (D). Active ingredient is discharged and conveyed from active ingredient hopper (G) into the high speed Forberg paddle-type mixer (D) by material handling conveyor (H) until the total weight of dry material measured by the load cells (E) and recorded by the process control system equates to the revised total target weight of dry material (1163lbs).

The process control system then starts the high speed Forberg paddle-type mixer (D) and implements a mix time of 60 seconds. After the mix time has elapsed the process control system opens the bomb doors (J) of the high speed Forberg paddle-type mixer (D) and the homogeneous dry mix is discharged into the under hopper (K).

Load cells (L) mounted on the under hopper (K) measure the actual weight of homogeneous dry mix in the under hopper (K) prior to the inclusion of the wet pre-mix. The actual weight of homogeneous dry mix is recorded by the process control system.

*Weight of dry material in high speed Forberg paddle-type mixer (D) – 1163lbs / actual weight of homogeneous dry mix – 1163lbs (no loss in weight during transfer)*

The homogeneous dry mix is discharged from the under hopper (K) and conveyed by a variable speed material handling conveyor (M) into a Scott slurry mixer (N)). The process control system sets the speed of the material handling conveyor (M) to the formulated batch process rate (30 ton per hour). The process control system confirms the batch process rate is achieved by monitoring the rate of loss in weight from the under hopper (K) measured by the load cells (L). The rate of the loss in weight is used by the process control system to calculate a target mass flow rate of wet pre-mix to be combined with the homogeneous dry mix at the inlet to the slurry mixer (N). The target mass flow rate of wet pre-mix and the rate of the loss in weight of the substantially homogeneous dry mix are constituently proportionate to the target constituent formulation.

The wet ingredients are blended into a wet pre-mix by a third party system. In the liquid feeding zone, the wet pre-mix is stored in the liquid storage tanks (Q) and agitated continuously to keep the wet ingredients in suspension in the wet pre-mix.

The process control system opens the discharge valve (O) under the liquid storage tanks (Q) and starts the liquid pump (P) to convey the wet pre-mix from the liquid storage tanks (Q) to the slurry mixer (N).

A flow meter (R) measures continuously the actual mass flow rate of wet pre-mix. The process control system monitors the actual mass flow rate. By varying the speed of the liquid pump (P) to adjust the actual mass flow rate towards the target mass flow rate, the process control system constituently proportionates the rate of the loss in weight of the homogeneous dry mix and the actual mass flow rate of wet pre-mix to the target constituent formulation. Thus for every 1lb of homogeneous dry mix lost from the under hopper (K) and entering the Scott slurry mixer (N) the process control system adjusts the speed of liquid pump (P) to deliver 0.56 lbs of wet pre-mix.

The process control system sets the speed of the Scott slurry mixer (N) (range 300 rpm to 800 rpm) to the formulated mixing speed of 350 rpm.

When optimisation is complete, the process control system locks down the speed settings on frequency converters controlling the speed of the Scott slurry mixer (N) and the material handling conveyor (M).

The homogeneous dry mix and wet ingredients are homogenised within the slurry mixer (N) on a continuous first in first out basis and the homogeneous slurry is discharged directly into a mechanical tub filler (S). The mechanical tub filler (S) ensures accurate and consistent flow of the homogeneous slurry into a tub at a filling and weighing station (U).

A filling control gate (T) is controlled by the process control system and opens in response to a signal from the filling and weighing station (U) that an empty tub is in place under the mechanical tub filler (S). The process control system monitors the weight of homogeneous slurry being discharged into the tub at the filling and weighing station (U) and closes the filling control gate (T) at the target weight.

The process control system records the final weight in the tub and starts the tub conveying line (V). The tub is moved forward from the filling and weighing station (U) to beneath a tub levelling conveyor (W). At the same time the next tub moves into position at the filling and weighing station (U) and the filling steps are repeated.

The tub levelling conveyor (W) includes a rotary knife positioned at the rim of the full tub to spread the homogeneous slurry evenly across the top of the full tub before the process control system move the full tub onto a labelling conveyor (X). The homogeneous slurry then solidifies to produce a glassy feed block upon cooling to ambient temperature.

The tub is then hand stacked onto pallets and placed into storage ready for dispatch.

**Claims**

1. A process for manufacturing an animal feed block according to a target constituent formulation in an apparatus which comprises

> (A) in a dry feeding zone, a first dry feeder which includes a first dry hopper charged with a dry pre-mix and a first material handling conveyor and a second dry feeder which includes a second dry hopper charged with an active ingredient and a second material handling conveyor,
> (B) in a dry mixing zone downstream from the dry feeding zone, a dry mixer and an under hopper downstream from the dry mixer,
> (C) in a liquid feeding zone, a first liquid feeder which includes a first liquid feeding device and a first liquid tank charged with a wet pre-mix which includes a liquid by-product and a liquid additive,
> (D) a slurry mixer downstream from the dry mixing zone and the liquid feeding zone and
> (E) a dispensing assembly downstream from the slurry mixer,
> the process comprising:

> > (A1) discharging and conveying the dry pre-mix from the first dry hopper to the dry mixer by the first material handling conveyor;
> > (A2) measuring the cumulative weight of the dry pre-mix in the dry mixer;
> > (A3) calculating a target weight of active ingredient to be conveyed to the dry mixer, wherein the target weight of the active ingredient and the cumulative weight of the dry pre-mix are constituently proportionate to the target constituent formulation;
> > (A4) discharging and conveying the active ingredient from the second dry hopper to the dry mixer by the second material handling conveyor;
> > (A5) during step (A4)
> > *either* measuring the loss in weight of the active ingredient in the second dry hopper and causing step (A4) to cease when the loss in weight of the active ingredient equates to the target weight of the active ingredient calculated in step (A3)
> > *or* measuring the weight of dry material in the dry mixer and causing step (A4) to cease when the weight of dry material in the dry mixer equates to the sum of the target weight of the active ingredient calculated in step (A3) and the cumulative weight of the dry pre-mix measured in step (A2);
> > (B1) mixing the active ingredient and the dry pre-mix in the dry mixer into a substantially homogeneous dry mix;
> > (B2) discharging the substantially homogeneous dry mix into the under hopper;
> > (B3) measuring the weight of the substantially homogeneous dry mix in the under hopper;
> > (B4) discharging and conveying the substantially homogeneous dry mix from the under hopper to the slurry mixer;
> > (B5) measuring the rate of the loss in weight of the substantially homogeneous dry mix in the under hopper during step (B4);
> > (C1) calculating a target flow rate of the wet pre-mix to be conveyed to the slurry mixer, wherein the target flow rate of the wet pre-mix and the rate of the loss in weight of the substantially homogeneous dry mix measured in step (B5) are constituently proportionate to the target constituent formulation;
> > (C2) discharging and conveying the wet pre-mix from the first liquid tank to the slurry mixer at an actual flow rate;

(C3) measuring the actual flow rate of the wet pre-mix;

(C4) adjusting continuously the actual flow rate to achieve the target flow rate;

(D1) mixing the substantially homogeneous dry mix and the wet pre-mix in the slurry mixer into a substantially homogeneous slurry;

(E1) discharging the substantially homogeneous slurry into the dispensing assembly;

(E2) dispensing the substantially homogeneous slurry portionwise from the dispensing assembly into receptacles; and

(E3) allowing the substantially homogeneous slurry in each receptacle to cool to form an animal feed block,

**characterised in that** the process further comprises:

(A6) calculating a target weight of wet pre-mix to be conveyed to the slurry mixer, wherein the target weight of the wet pre-mix and the cumulative weight of the dry pre-mix are constituently proportionate to the target constituent formulation.

2. A process as claimed in claim 1 wherein the dry pre-mix comprises a dry protein and a dry mineral.

3. A process as claimed in any preceding claim wherein the liquid by-product is or includes molasses.

4. A process as claimed in any preceding claim wherein step (A5) is carried out during step (A4) by measuring the weight of dry material in the dry mixer and causing step (A4) to cease when the weight of dry material in the dry mixer equates to the sum of the target weight of the active ingredient calculated in step (A3) and the cumulative weight of the dry pre-mix measured in step (A2).

5. A process as claimed in any preceding claim carried out without heating.

6. A process as claimed in any preceding claim wherein step (B4) is carried out by a variable speed material handling conveyor.

7. A process as claimed in claim 6 wherein when the actual flow rate approximates consistently to the target flow rate, the process further comprises:

(D2) locking the speed of the slurry mixer;

(D3) locking the speed of the variable speed material handling conveyor.

8. A process as claimed in any preceding claim further comprising:

(D4) causing step (C2) to cease when the rate of the loss in weight measured in step (B5) is zero.

9. A process as claimed in any preceding claim wherein the ratio of the weight of wet pre-mix to dry pre-mix in the target constituent formulation is in the range 0.50:1 to 0.60:1.

10. A process as claimed in any preceding claim wherein the amount of liquid by-product in the target constituent formulation is in the range 30 to 35wt%.

11. A process as claimed in any preceding claim wherein the liquid by-product is selected from the group consisting of sugar cane molasses, sugar beet molasses, starch molasses, citrus molasses, pot ale syrup, whey, corn steep liquor, stillage and a mixture thereof.

12. A process as claimed in claim 3 wherein the amount of molasses in the target constituent formulation is in the range 9 to 11 wt%.

13. A process as claimed in any preceding claim wherein the liquid additive is vegetable oil.

14. A process as claimed in any preceding claim wherein the active ingredient is calcium oxide.

15. A process as claimed in claim 14 wherein the amount of active ingredient in the target constituent formulation is in the range 3.0 to 7.0wt%.

16. A process as claimed in any preceding claim wherein the dry pre-mix comprises a source of carbohydrate, a source of nitrogen, a source of protein or a source of fat.

17. A process as claimed in any preceding claim wherein the dry pre-mix comprises a dry ingredient selected from the group consisting of a vitamin, a mineral, a protein, a flavouring, a colourant, a preservative, a pharmaceutical, a stabiliser, a fat, a nutritional supplement, a dietary supplement, a carbohydrate, soapstock, urea, lignin sulphonate, lecithin, fibres and a mixture thereof.

18. A process as claimed in any preceding claim further comprising:

(E2a) advancing the receptacles consecutively on a receptacle conveyor to beneath a mechanical leveller;
(E2b) mechanically levelling the homogeneous slurry in each receptacle using the mechanical leveller.

**Patentansprüche**

1. Verfahren zur Herstellung eines Futtermittelblocks für Tiere gemäß einer vorgegebenen Formulierung von Bestandteilen in einem Apparat, welcher umfasst

(A) in einer Trockeneinspeisungszone einen ersten Trockeneinspeiser, der einen ersten Trockentrichter umfasst, welcher mit einem trockenen Vorgemisch befüllt ist, und ein erstes Materialfördersystem, sowie einen zweiten Trockeneinspeiser, der einen zweiten Trockentrichter umfasst, der mit einem aktiven Inhaltsstoff befüllt ist, und ein zweites Materialfördersystem,
(B) in einer Trockenmischzone stromabwärts der Trockeneinspeisungszone einen Trockenmischer und einen Untertrichter stromabwärts vom Trockenmischer,
(C) in einer Flüssigkeitseinspeisungszone einen ersten Flüssigkeitseinspeiser, der eine erste Flüssigkeitseinspeisungsvorrichtung und einen ersten Flüssigkeitstank umfasst, der mit einem feuchten Vorgemisch befüllt ist, das ein flüssiges Nebenprodukt und einen flüssigen Zusatzstoff enthält,
(D) einen Aufschlämmungsmischer stromabwärts von der Trockenmischzone und der Flüssigkeitseinspeisungszone sowie
(E) eine Dosiervorrichtung stromabwärts vom Aufschlämmungsmischer,
wobei das Verfahren umfasst:

(A1) das Ablassen und Befördern des trockenen Vorgemischs aus dem ersten Trockentrichter zum Trockenmischer durch das erste Materialfördersystem;
(A2) das Messen des Gesamtgewichts des trockenen Vorgemischs im Trockenmischer;
(A3) das Berechnen eines Zielgewichts des aktiven Inhaltsstoffs, der in den Trockenmischer befördert werden soll, wobei das Zielgewicht des aktiven Inhaltsstoffs und das Gesamtgewicht des trockenen Vorgemischs konstitutiv proportional zur vorgegebenen Formulierung von Bestandteilen sind;
(A4) das Ablassen und Befördern des aktiven Inhaltsstoffs aus dem zweiten Trockentrichter zum Trockenmischer durch das zweite Materialfördersystem;
(A5) während des Schrittes (A4)
*entweder* das Messen des Gewichtsverlusts des aktiven Inhaltsstoffs im zweiten Trockentrichter und das Veranlassen des Einstellens von Schritt (A4) wenn der Gewichtsverlust des aktiven Inhaltsstoffs dem in Schritt (A3) berechneten Zielgewicht des aktiven Inhaltsstoffs entspricht
*oder* das Messen des Gewichts des Trockenmaterials im Trockenmischer und das Veranlassen des Einstellens von Schritt (A4) wenn das Gewicht des Trockenmaterials im Trockenmischer der Summe des in Schritt (A3) berechneten Zielgewichts des aktiven Inhaltsstoffs und des in Schritt (A2) berechneten Gesamtgewichts des trockenen Vorgemischs entspricht;
(B1) das Mischen des aktiven Inhaltsstoffs und des trockenen Vorgemischs im Trockenmischer zu einem im Wesentlichen homogenen Trockengemisch;
(B2) das Ablassen des im Wesentlichen homogenen Trockengemischs in den Untertrichter;
(B3) das Messen des Gewichts des im Wesentlichen homogenen Trockengemischs im Untertrichter;
(B4) das Ablassen und Befördern des im Wesentlichen homogenen Trockengemischs aus dem Untertrichter in den Aufschlämmungsmischer;
(B5) das Messen der Gewichtsverlustrate des im Wesentlichen homogenen Trockengemischs im Untertrichter während Schritt (B4);
(C1) das Berechnen einer Zielflussrate des zum Aufschlämmungsmischer zu befördernden feuchten Vorgemischs, wobei die Zielflussrate des feuchten Vorgemischs und die in Schritt (B5) gemessene Rate des Gewichtsverlusts des im Wesentlichen homogenen Trockengemischs konstitutiv proportional zur vorgegebenen Formulierung von Bestandteilen sind;

(C2) das Ablassen und Befördern des feuchten Vorgemischs aus dem ersten Flüssigkeitstank in den Aufschlämmungsmischer mit einer tatsächlichen Flussrate;

(C3) das Messen der tatsächlichen Flussrate des feuchten Vorgemischs;

(C4) das kontinuierliche Anpassen der tatsächlichen Flussrate, um die Zielflussrate zu erreichen;

(D1) das Mischen des im Wesentlichen homogenen Trockengemischs und des feuchten Vorgemischs im Aufschlämmungsmischer in eine im Wesentlichen homogene Aufschlämmung;

(E1) das Ablassen der im Wesentlichen homogenen Aufschlämmung in die Dosieranordnung;

(E2) das portionsweise Dosieren der im Wesentlichen homogenen Aufschlämmung aus der Dosieranordnung in Aufnahmebehälter sowie

(E3) das Abkühlenlassen der im Wesentlichen homogenen Aufschlämmung in jedem Aufnahmebehälter zur Bildung eines Futtermittelblocks für Tiere,

**dadurch gekennzeichnet, dass** das Verfahren weiter umfasst:

(A6) das Berechnen eines Zielgewichts des in den Aufschlämmungsmischer zu befördernden feuchten Vorgemischs, wobei das Zielgewicht des feuchten Vorgemischs und das Gesamtgewicht des trockenen Vorgemischs konstitutiv proportional zur vorgegebenen Formulierung von Bestandteilen sind.

2. Verfahren nach Anspruch 1, wobei das trockene Vorgemisch ein trockenes Protein und ein trockenes Mineral umfasst.

3. Verfahren wie in einem der vorherigen Ansprüchen beansprucht, wobei das flüssige Nebenprodukt Molassen sind oder umfasst.

4. Verfahren wie in einem der vorherigen Ansprüche beansprucht, wobei Schritt (A5) während Schritt (A4) ausgeführt wird durch das Messen des Gewichts des Trockenmaterials im Trockenmischer und das Veranlassen des Einstellens von Schritt (A4), wenn das Gewicht des Trockenmaterials im Trockenmischer der Summe des in Schritt (A3) berechneten Zielgewichts des aktiven Inhaltsstoffs und des in Schritt (A2) berechneten Gesamtgewichts des trockenen Vorgemischs entspricht.

5. Verfahren wie in einem der vorherigen Ansprüche beansprucht, das ohne Erhitzen durchgeführt wird.

6. Verfahren wie in einem der vorherigen Ansprüche beansprucht, wobei Schritt (B4) mit einem Materialfördersystem mit veränderlicher Geschwindigkeit durchgeführt wird.

7. Verfahren wie in Anspruch 6 beansprucht, wobei, wenn sich die tatsächliche Flussrate beständig der Zielflussrate annähert, das Verfahren ferner umfasst:

(D2) das Verriegeln der Geschwindigkeit des Aufschlämmungsmischers;

(D3) das Verriegeln der Geschwindigkeit des Materialfördersystems mit veränderlicher Geschwindigkeit.

8. Verfahren wie in einem der vorherigen Ansprüche beansprucht, das ferner umfasst:

(D4) das Veranlassen des Einstellens von Schritt (C2), wenn die in Schritt (B5) gemessene Gewichtsverlustrate Null beträgt.

9. Verfahren wie in einem der vorherigen Ansprüche beansprucht, wobei das Gewichtsverhältnis von feuchtem Vorgemisch zu trockenem Vorgemisch in der vorgegebenen Formulierung von Bestandteilen im Bereich von 0,50:1 bis 0,60:1 liegt.

10. Verfahren wie in einem der vorherigen Ansprüche beansprucht, wobei die Menge an flüssigem Nebenprodukt in der vorgegebenen Formulierung von Bestandteilen im Bereich von 30 bis 35 Gew.% liegt.

11. Verfahren wie in einem der vorherigen Ansprüche beansprucht, wobei das flüssige Nebenprodukt ausgewählt ist aus der Gruppe bestehend aus Zuckerrohrmolassen, Zuckerrübenmolassen, Stärkemolassen, Zitrusmolassen, Schlempesirup, Molke, Maisquellwasser, Schlempe und einem Gemisch davon.

**12.** Verfahren wie in Anspruch 3 beansprucht, wobei die Menge an Molassen in der vorgegebenen Formulierung von Bestandteilen im Bereich von 9 bis 11 Gew.% liegt.

**13.** Verfahren wie in einem der vorherigen Ansprüche beansprucht, wobei der flüssige Zusatzstoff Pflanzenöl ist.

**14.** Verfahren wie in einem der vorherigen Ansprüche beansprucht, wobei der aktive Inhaltsstoff Calciumoxid ist.

**15.** Verfahren wie in Anspruch 14 beansprucht, wobei der Gehalt des aktiven Inhaltsstoffs in der vorgegebenen Formulierung von Bestandteilen im Bereich von 3,0 bis 7,0 Gew.% liegt.

**16.** Verfahren wie in einem der vorherigen Ansprüche beansprucht, wobei das trockene Vorgemisch eine Kohlenhydratquelle, eine Stickstoffquelle, eine Proteinquelle oder eine Fettquelle umfasst.

**17.** Verfahren wie in einem der vorherigen Ansprüche beansprucht, wobei das trockene Vorgemisch einen trockenen Inhaltsstoff umfasst, der ausgewählt ist aus der Gruppe bestehend aus einem Vitamin, einem Mineral, einem Protein, einem Geschmacksstoff, einem Farbstoff, einem Konservierungsstoff, einem Arzneimittel, einem Stabilisator, einem Fett, einem Nahrungsergänzungsmittel, einem diätischen Ergänzungsmittel, einem Kohlenhydrat, Soapstock, Harnstoff, Ligninsulfonat, Lecithin, Fasern und einem Gemisch davon.

**18.** Verfahren wie in einem der vorherigen Ansprüche beansprucht, das ferner umfasst:

(E2a) das Befördern der Aufnahmebehälter nacheinander auf einem Aufnahmebehälterfördersystem unter einen mechanischen Nivellierer;
(E2b) das mechanische Nivellieren der homogenen Aufschlämmung in jedem Aufnahmebehälter unter Verwendung des mechanischen Nivellierers.

**Revendications**

**1.** Processus pour fabriquer un bloc d'alimentation animale selon une formulation de constituant cible dans un appareil qui comprend

(A) dans une zone d'alimentation à sec, un premier appareil d'alimentation à sec qui comporte une première trémie à sec chargée avec un pré-mélange sec et un premier transporteur de manutention et un deuxième appareil d'alimentation à sec qui comporte une deuxième trémie à sec chargée avec un ingrédient actif et un deuxième transporteur de manutention,
(B) dans une zone de mélange à sec en aval de la zone d'alimentation à sec, un mélangeur à sec et une sous-trémie en aval du mélangeur à sec,
(C) dans une zone d'alimentation en liquide, un premier appareil d'alimentation en liquide qui comporte un premier dispositif d'alimentation en liquide et un premier réservoir de liquide chargé avec un pré-mélange humide qui comporte un sous-produit liquide et un additif liquide,
(D) un mélangeur de suspension en aval de la zone de mélange à sec et de la zone d'alimentation en liquide et
(E) un ensemble de distribution en aval du mélangeur de suspension,
le processus comprenant le fait :

(A1) de décharger et de transporter le pré-mélange sec à partir de la première trémie à sec au mélangeur à sec par le premier transporteur de manutention ;
(A2) de mesurer le poids cumulatif du pré-mélange sec dans le mélangeur à sec ;
(A3) de calculer un poids cible d'ingrédient actif à transporter au mélangeur à sec, dans lequel le poids cible de l'ingrédient actif et le poids cumulatif du pré-mélange sec sont constitutivement proportionnels à la formulation de constituant cible ;
(A4) de décharger et de transporter l'ingrédient actif à partir de la deuxième trémie à sec au mélangeur à sec par le deuxième transporteur de manutention ;
(A5) au cours de l'étape (A4)
soit de mesurer la perte de poids de l'ingrédient actif dans la deuxième trémie à sec et d'amener l'étape (A4) à s'arrêter lorsque la perte de poids de l'ingrédient actif est égale au poids cible de l'ingrédient actif calculé dans l'étape (A3)
soit de mesurer le poids de matière sèche dans le mélangeur à sec et d'amener l'étape (A4) à s'arrêter lorsque le poids de matière sèche dans le mélangeur à sec est égal à la somme du poids cible de l'ingrédient actif calculé dans l'étape (A3) et du poids cumulatif du pré-mélange sec mesuré dans l'étape (A2) ;

(B1) de mélanger l'ingrédient actif et le pré-mélange sec dans le mélangeur à sec dans un mélange sec essentiellement homogène ;

(B2) de décharger le mélange sec essentiellement homogène dans la sous-trémie ;

(B3) de mesurer le poids du mélange sec essentiellement homogène dans la sous-trémie ;

(B4) de décharger et de transporter le mélange sec essentiellement homogène à partir de la sous-trémie au mélangeur de suspension ;

(B5) de mesurer le taux de la perte de poids du mélange sec essentiellement homogène dans la sous-trémie au cours de l'étape (B4) ;

(C1) de calculer un débit cible du pré-mélange humide à transporter au mélangeur de suspension, dans lequel le débit cible du pré-mélange humide et le taux de la perte de poids du mélange sec essentiellement homogène mesuré dans l'étape (B5) sont constitutivement proportionnels à la formulation de constituant cible ;

(C2) de décharger et de transporter le pré-mélange humide à partir du premier réservoir de liquide au mélangeur de suspension à un débit réel ;

(C3) de mesurer le débit réel du pré-mélange humide ;

(C4) d'ajuster en continu le débit réel pour atteindre le débit cible ;

(D1) de mélanger le mélange sec essentiellement homogène et le pré-mélange humide dans le mélangeur de suspension dans une suspension essentiellement homogène ;

(E1) de décharger la suspension essentiellement homogène dans l'ensemble de distribution ;

(E2) de distribuer la suspension essentiellement homogène par portions à partir de l'ensemble de distribution dans des réceptacles ; et

(E3) de permettre à la suspension essentiellement homogène dans chaque réceptacle de se refroidir pour former un bloc d'alimentation animale,

**caractérisé en ce que** le processus comprend en outre le fait :

(A6) de calculer un poids cible de pré-mélange humide à transporter au mélangeur de suspension, dans lequel le poids cible du pré-mélange humide et le poids cumulatif du pré-mélange sec sont constitutivement proportionnels à la formulation de constituant cible.

2. Processus tel que revendiqué dans la revendication 1, dans lequel le pré-mélange sec comprend une protéine sèche et un minéral sec.

3. Processus tel que revendiqué dans l'une des revendications précédentes, dans lequel le sous-produit liquide est de la mélasse ou comporte celle-ci.

4. Processus tel que revendiqué dans l'une des revendications précédentes, dans lequel l'étape (A5) est réalisée au cours de l'étape (A4) en mesurant le poids de matière sèche dans le mélangeur à sec et en amenant l'étape (A4) à s'arrêter lorsque le poids de matière sèche dans le mélangeur à sec est égal à la somme du poids cible de l'ingrédient actif calculé dans l'étape (A3) et du poids cumulatif du pré-mélange sec mesuré dans l'étape (A2).

5. Processus tel que revendiqué dans l'une des revendications précédentes réalisé sans chauffage.

6. Processus tel que revendiqué dans l'une des revendications précédentes, dans lequel l'étape (B4) est réalisée par un transporteur de manutention à vitesse variable.

7. Processus tel que revendiqué dans la revendication 6, dans lequel lorsque le débit réel se rapproche constamment du débit cible, le processus comprend en outre le fait :

(D2) de bloquer la vitesse du mélangeur de suspension ;

(D3) de bloquer la vitesse du transporteur de manutention à vitesse variable.

8. Processus tel que revendiqué dans l'une des revendications précédentes, comprenant en outre le fait :

(D4) d'amener l'étape (C2) à s'arrêter lorsque le taux de la perte de poids mesuré dans l'étape (B5) est égal à zéro.

9. Processus tel que revendiqué dans l'une des revendications précédentes, dans lequel le rapport du poids de pré-mélange humide sur le pré-mélange sec dans la formulation de constituant cible se trouve dans la plage allant de 0,50 : 1 à 0,60 : 1.

10. Processus tel que revendiqué dans l'une des revendications précédentes, dans lequel la quantité de sous-produit liquide dans la formulation de constituant cible se trouve dans la plage allant de 30 à 35% en poids.

11. Processus tel que revendiqué dans l'une des revendications précédentes, dans lequel le sous-produit liquide est choisi dans le groupe constitué de mélasse de canne à sucre, de mélasse de betterave à sucre, de mélasse d'amidon, de mélasse d'agrumes, de sirop de résidus de distillerie, de lactosérum, d'eau de macération de maïs, de drêche de distillerie et d'un mélange de ceux-ci.

12. Processus tel que revendiqué dans la revendication 3, dans lequel la quantité de mélasse dans la formulation de constituant cible se trouve dans la plage allant de 9 à 11% en poids.

13. Processus tel que revendiqué dans l'une des revendications précédentes, dans lequel l'additif liquide est une huile végétale.

14. Processus tel que revendiqué dans l'une des revendications précédentes, dans lequel l'ingrédient actif est l'oxyde de calcium.

15. Processus tel que revendiqué dans la revendication 14, dans lequel la quantité d'ingrédient actif dans la formulation de constituant cible se trouve dans la plage allant de 3,0 à 7,0% en poids.

16. Processus tel que revendiqué dans l'une des revendications précédentes, dans lequel le pré-mélange sec comprend une source de glucide, une source d'azote, une source de protéine ou une source de matière grasse.

17. Processus tel que revendiqué dans l'une des revendications précédentes, dans lequel le pré-mélange sec comprend un ingrédient sec choisi dans le groupe constitué d'une vitamine, d'un minéral, d'une protéine, d'un arôme, d'un colorant, d'un conservateur, d'un produit pharmaceutique, d'un agent de stabilisation, d'une matière grasse, d'un complément nutritionnel, d'un complément alimentaire, d'un glucide, d'une pâte de neutralisation, d'urée, de sulfonate de lignine, de lécithine, de fibres et d'un mélange de ceux-ci.

18. Processus tel que revendiqué dans l'une des revendications précédentes, comprenant en outre le fait :

(E2a) de faire avancer les réceptacles consécutivement sur un transporteur de réceptacle en dessous d'une niveleuse mécanique ;
(E2b) de niveler mécaniquement la suspension homogène dans chaque réceptacle en utilisant la niveleuse mécanique.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040018288 A
- US 4631192 A